(19) Europäisches Patentamt
European Patent Office
Office européen des brevets

(11)  EP 3 096 427 B1

(12)  EUROPEAN PATENT SPECIFICATION

(45) Date of publication and mention
of the grant of the patent:
**16.09.2020  Bulletin 2020/38**

(51) Int Cl.:
*H02G 15/08* (2006.01)          *H01B 13/016* (2006.01)
*H02G 1/14* (2006.01)           *H01R 9/05* (2006.01)
*H01R 4/02* (2006.01)

(21) Application number: **16173784.6**

(22) Date of filing: **28.05.2007**

(54) **CONNECTION OF RETURN CONDUCTORS IN A CONNECTING PORTION OF POWER DIRECT-CURRENT COAXIAL CABLE**

VERBINDUNG DER RÜCKLEITUNGEN IN EINEM VERBINDUNGSTEIL VON GLEICHSTROMKOAXIALKABEL

CONNEXION DE CONDUCTEUR DE RETOUR UNE PARTIE DE RACCORDEMENT DE CÂBLE COAXIAUX À COURANT CONTINU DE PUISSANCE

(84) Designated Contracting States:
**IT SE**

(30) Priority: **02.06.2006  JP 2006154104**
**02.06.2006  JP 2006154113**
**02.06.2006  JP 2006154125**
**02.06.2006  JP 2006154139**

(43) Date of publication of application:
**23.11.2016  Bulletin 2016/47**

(62) Document number(s) of the earlier application(s) in
accordance with Art. 76 EPC:
**07744273.9 / 2 026 439**

(73) Proprietors:
• **Furukawa Electric Co., Ltd.**
**Chiyoda-ku**
**Tokyo 100-8322 (JP)**
• **Electric Power Development Co., Ltd.**
**Tokyo 104-8165 (JP)**
• **FUJIKURA LTD.**
**Tokyo 135-8512 (JP)**

(72) Inventors:
• **MIZUNO, Takehiko**
**Chiba 285-8550 (JP)**
• **KAWAKAMI, Shinichi**
**Tokyo 104-8165 (JP)**

(74) Representative: **Studio Torta S.p.A.**
**Via Viotti, 9**
**10121 Torino (IT)**

(56) References cited:
**DE-B- 1 034 240        JP-A- S4 921 684**
**JP-A- H11 120 837      JP-A- 2001 112 139**

**Description**

TECHNICAL FIELD

The present invention relates to a method of connecting return conductors in a connecting portion between power direct-current coaxial cables having a center main conductor and a coaxially-arranged return conductor, and relates to a connecting portion of the power direct-current coaxial cable.

BACKGROUND ART

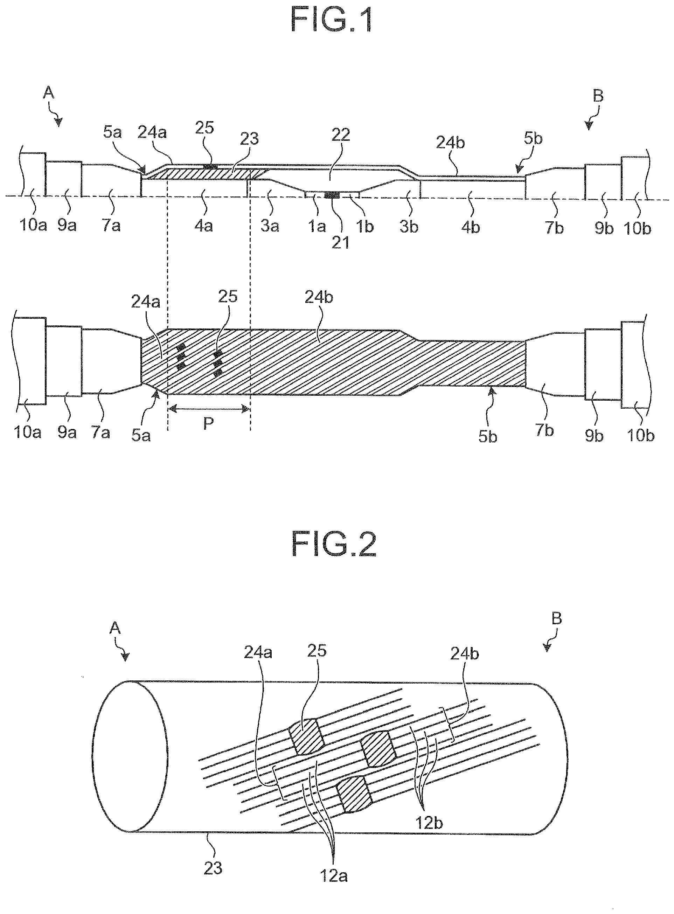

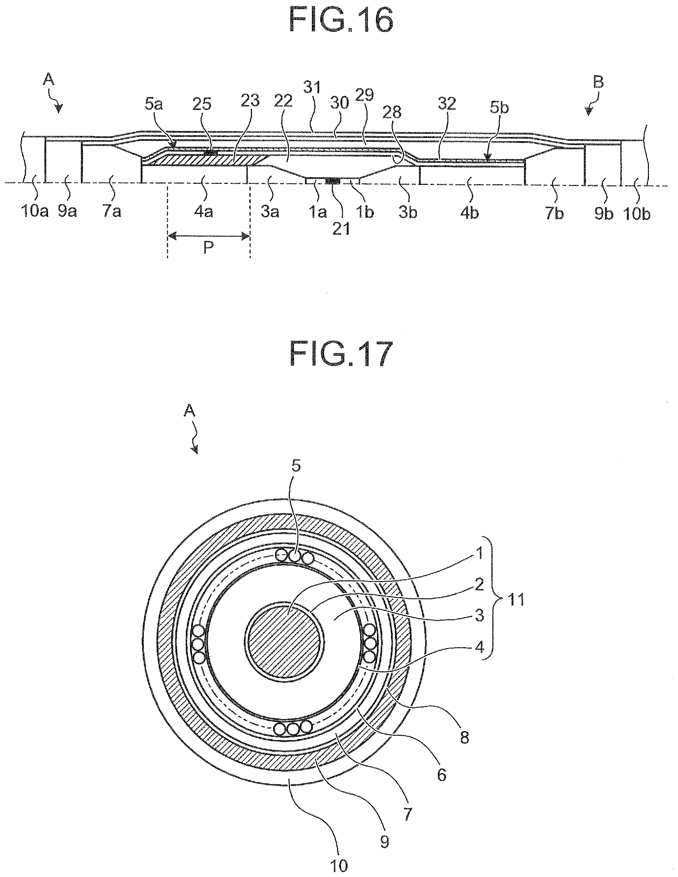

Fig. 17 shows an example of a power direct-current coaxial cable. The direct-current coaxial cable A includes a main conductor 1 at its center, and an inner semiconducting layer 2, a main insulating layer 3, an outer semiconducting layer 4, a return conductor 5, a return inner semiconducting layer 6, a return insulating layer 7, a return outer semiconducting layer 8, a lead sheath 9, and an anticorrosion layer 10 sequentially provided on the outer circumference of the main conductor 1 in a coaxial manner (see Fig. 1 of Patent Literature 1).

The main conductor 1 to the outer semiconducting layer 4 constitute a cable core 11. The return conductor 5 is formed by coaxially stranding a plurality of return-conductor wires (copper wires) on the outer circumference of the cable core 11. The return-conductor-wire stranding method is classified into a one-directional stranding (spiral winding) in which the stranding direction is not changed and an SZ stranding (see Fig. 2 of Patent Literature 1) in which the stranding direction is reversed at regular pitches.

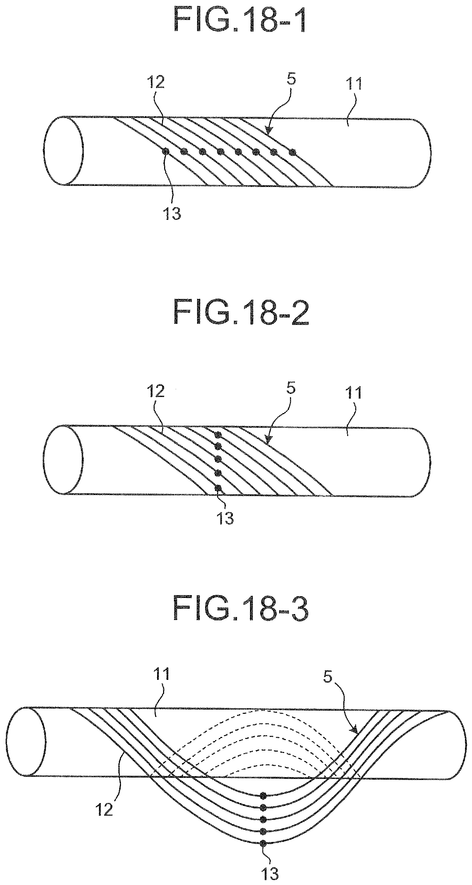

When connecting such direct-current coaxial cables with each other, it is also necessary to perform a connection of the return conductors at a cable connecting portion. A conventional method of connecting the return conductors is to weld the return-conductor wires one by one in a butt jointing manner. Figs. 18-1 and 18-2 show a connection state of the return conductor 5 when the return-conductor wires 12 are stranded in one direction on the cable core 11, and Fig. 18-3 shows a connection state of the return conductor 5 when the return-conductor wires 12 are SZ stranded. The reference numeral 13 indicates a weld connecting portion of the return-conductor wires 12.

Moreover, Patent Literature 2 discloses a connecting portion according to the preamble of claim 1.

The cross-sectional areas of the main conductor and the return conductor of the power direct-current coaxial cable are designed according to an environment where the cable is installed, and determined in such a manner that a temperature of the main conductor does not exceed its maximum temperature tolerance (for example, 90°C) and a temperature of the return conductor does not exceed its maximum temperature tolerance (for example, 75°C) across the whole length of the cable when a rated current is applied to the main conductor and the return conductor.

The connecting portion of the direct-current coaxial cable includes a main-conductor connecting portion at the center of the connection portion, a reinforcing main insulating layer for connecting the main insulating layers with each other on the outer circumference of the main-conductor connecting portion, a return-conductor connecting portion on the outer circumference of the reinforcing main insulating layer, a reinforcing return insulating layer for connecting the return insulating layers with each other on the outer circumference of the return-conductor connecting portion, and a metallic-layer connecting portion on the outer circumference of the reinforcing return insulating layer.

Patent Literature 1: Japanese Patent Application Laid-open No. H11-111071
Patent Literature 2: Japanese Patent Application JP 2001 112139 ;
Patent Literature 3: Japanese Patent Application JP S49 21684;
Patent Literature 4: DE 1034 240;
Patent Literature 5: JP H 11 120837;

DISCLOSURE OF INVENTION

PROBLEM TO BE SOLVED BY THE INVENTION

The conventional method of welding the return-conductor wires one by one can be applied for connecting the return conductors between direct-current coaxial cables having the return conductors of the same configuration (the diameter of a wire and the number of wires). However, when the number of return-conductor wires is large, the conventional method has a problem that the number of welding processes is increased, resulting in a long time for the whole welding process.

In addition, the conventional method of welding the return-conductor wires one by one cannot be used for connecting return-conductor wires of direct-current coaxial cables having different numbers of return-conductor wires. In other words, there will be excess return-conductor wires that are remained unconnected in a direct-current coaxial cable having a larger number of return-conductor wires.

Furthermore, when the return-conductor wires are welded on an outer semiconducting layer of a cable core or a connecting portion, there is a problem that a heat generated at the time of welding gives a thermal damage to the outer semiconducting layer and a main insulating layer of the cable or the outer semiconducting layer and a reinforcing main insulating layer of the connecting portion.

To cope with the above problems, a method by using a direct-current coaxial cable having SZ-stranded return-conductor wires can be considered, as shown in Fig. 18-3, in which return-conductor wires to be welded are separated from the outer semiconducting layer of the cable core or the connecting portion and welded, and after the welding is completed, the return-conductor wires are returned to the SZ-stranded state. However, this method can be applied only to the direct-current coaxial cables having the SZ-stranded return-conductor wires. Because the direct-current coaxial cables having the SZ-stranded return-conductor wires have low productivity and high cost compared to a direct-current coaxial cable having one-directional stranded return-conductor wires, it is unadvisable to have the return-conductor wires SZ stranded only for the weld connection of the return-conductor wires.

In general, a reinforcing main insulating layer and a reinforcing return insulating layer of a connecting portion are formed thicker than thicknesses of a main insulating layer and the return insulating layer of a cable portion, respectively. For this reason, a thermal resistance of the connecting portion of a direct-current coaxial cable in the radial direction becomes lager than a thermal resistance of the cable portion in the radial direction. For example, although a connecting portion of a factory joint (FJ) of which the connecting portion is finished with virtually same diameter as the cable portion (semi-identical diameter) between the direct-current coaxial cables has virtually the same configuration as the cable portion, the thermal resistance of the connecting portion in the radial direction is still larger than the thermal resistance of the cable portion.

Moreover, when a connection tube (or a protection tube) made of metal or plastic is provided on the outside of the connecting portion of the direct-current coaxial cable, a compound for waterproof (or for insulation) is generally filled between the return insulating layer/the reinforcing return insulating layer and the connection tube. In this type of connecting portion, the thermal resistance in the radial direction becomes even larger.

Because the rated current is applied to both the main conductor and the return conductor in the direct-current coaxial cable, both the main conductor and the return conductor become the heat source, so that an increase of the thermal resistance at the connecting portion of the direct-current coaxial cable becomes a factor that boosts a temperature rise of the connecting portion.

In the connection of the direct-current coaxial cable, there is a case in which a connection of direct-current coaxial cables having different configurations is performed, as well as a connection of direct-current coaxial cables having the same configuration as in the case of the factory joint. For example, a submarine direct-current coaxial cable that is installed under the sea and a land direct-current coaxial cable that is installed on land have different cross-sectional areas of the main conductor and the return conductor because their installation environments are different. When the submarine direct-current coaxial cable is connected to the land direct-current coaxial cable (in general, it is referred to as a beach connecting portion because the cables are connected at the beach), the heat amount of the main conductor and the return conductor is different in the connecting portion in the longitudinal direction, and the heat amount is larger on a cable side with a smaller cross-sectional areas of the main conductor and the return conductor. Therefore, there is a worry that the increase of the thermal resistance in the connection portion of the direct-current coaxial cable in the radial direction causes a significant temperature rise in the connecting portion.

In addition, because the return conductor of the direct-current coaxial cable is formed by densely stranding the return-conductor wires in a coaxial manner, adjacent return-conductor wires are almost in contact with each other. On the contrary, in the connecting portion of the direct-current coaxial cable, the outer diameter of the reinforcing main insulating layer of the connecting portion is larger than the outer diameter of the main insulating layer of the cable, the return conductor located on the outside of the reinforcing main insulating layer of the connecting portion has a wider space between adjacent return-conductor wires compared to the return conductor of the cable portion.

When the space between the return-conductor wires is large, there is a problem that the electromagnetic shield characteristic becomes insufficient. Furthermore, when there is a gap between the return-conductor wires, it can be considered that almost no current flows between the adjacent return-conductor wires, and if an unbalanced current flows between the return-conductor wires in the cable connecting portion, the current is concentrated on a part of the return-conductor wires, resulting in a possibility that an abnormal heat is generated.

Moreover, still another object of the present invention is to suppress a temperature rise in a connecting portion of a direct-current coaxial cable, and more particularly, to suppress a temperature rise in a connecting portion of direct-current coaxial cables having return conductors of different cross-sectional areas.

Furthermore, still another object of the present invention is to prevent degradation of the electromagnetic shield characteristic and to prevent an abnormal heat generation in a return conductor, in a connecting portion of a direct-current coaxial cable.

MEANS FOR SOLVING PROBLEM

To solve the above problems and to achieve the object, a connecting portion including power direct-current coaxial cables as claimed in claim 1.

EFFECT OF THE INVENTION

According to the present invention, it is possible to connect return conductors between direct-current coaxial cables having return conductors of different configuration (number of wires). In addition, also in a connection of return conductors between direct-current coaxial cables having the same configuration of the return conductors, an operation time for connecting the return conductors can be shortened.

Furthermore, according to the present invention, a thermal damage to an outer semiconducting layer and a main insulating layer of a direct-current coaxial cable and an outer semiconducting layer and a reinforcing main insulating layer of a connecting portion due to a heat generated at the time of welding the return conductors can be avoided. In addition, an external damage to the outer semiconducting layer and the main insulating layer of the direct-current coaxial cable and the outer semiconducting layer and the reinforcing main insulating layer of the connecting portion can also be avoided. Furthermore, because the outer diameter of the outer semiconducting layer of the cable portion is smaller than the outer diameter of the outer semiconducting layer of the connecting portion in the connecting portion of the direct-current coaxial cable, if a buffer layer is formed on the outer semiconducting layer of the cable portion by using a difference between the outer diameters, the outer diameter of the connecting portion of the direct-current coaxial cable can be suppressed to small, and at the same time, workability of connecting the return conductors can be improved. Moreover, the outer diameter is made same from the buffer layer to the outer semiconducting layer of the connecting portion, there is an advantage that a bending of the return conductor can be made small.

Moreover, according to the present invention, because the cross-sectional area of a return conductor becomes large (a resistance of the return conductor becomes small) in most area of a connecting portion of a direct-current coaxial cable in the longitudinal direction, a heat amount generated by current flowing through the return conductor in the connecting portion, which makes it possible to suppress a temperature rise in the connecting portion.

Furthermore, according to the present invention, even when a gap between return-conductor wires becomes larger, it is possible to complement degradation of the electromagnetic shield characteristic by a metallic layer. In addition, because the metallic layer is electrically in contact with a plurality of return-conductor wires, the current distribution becomes even between the return-conductor wires owing to the metallic layer that functions as a current path, and at the same time, because the resistance of the return conductor is decreased, a heat generation in the return conductor can be suppressed, resulting in a suppression of a temperature rise in the connecting portion of the direct-current coaxial cable.

BRIEF DESCRIPTION OF DRAWINGS

[Fig. 1] Fig. 1 is a longitudinal cross section with a partial cut-open plan view of a substantial part of a power direct-current coaxial cable to which a return-conductor connecting method according to a first embodiment, which is not part of the invention.

[Fig. 2] Fig. 2 is a schematic diagram for explaining the return-conductor connecting method according to the first embodiment.

[Fig. 3] Fig. 3 is a schematic diagram for explaining a return-conductor connecting method according to the present invention.

[Fig. 4-1] Fig. 4-1 is a plan view of a return-conductor wire bundle showing a tip-to-tip state and a welded state by the return-conductor connecting method shown in Fig. 3.

[Fig. 4-2] Fig. 4-2 is a front view of a return-conductor wire bundle showing a tip-to-tip state and a welded state by the return-conductor connecting method shown in Fig. 3.

[Fig. 5] Fig. 5 is a schematic diagram for explaining a return-conductor connecting method according to a third embodiment, which is part of the invention.

[Fig. 6] Fig. 6 is a schematic diagram for explaining a return-conductor connecting method according to a fourth embodiment, which is part of the invention.

[Fig. 7] Fig. 7 is a schematic diagram for explaining a return-conductor connecting method according to a fifth embodiment, which is part of the invention.

[Fig. 8-1] Fig. 8-1 is a schematic diagram for explaining a return-conductor connecting method according to a modification example of the second embodiment.

[Fig. 8-2] Fig. 8-2 is a schematic diagram for explaining a return-conductor connecting method according to a modification example of the third embodiment.

[Fig. 8-3] Fig. 8-3 is a schematic diagram for explaining a return-conductor connecting method according to a modification example of the fourth embodiment.

[Fig. 9] Fig. 9 is a longitudinal cross section with a partial cut-open plan view of a substantial part of a power direct-current coaxial cable to which a return-conductor connecting method according to a sixth embodiment, which is not part of the invention.

[Fig. 10] Fig. 10 is a longitudinal cross section with a partial cut-open plan view of a substantial part of a power direct-current coaxial cable according to a seventh embodiment, which is part of the invention.

[Fig. 11-1] Fig. 11-1 is a graph showing temperature distributions of a main conductor and a return conductor according to a fourth embodiment example.

[Fig. 11-2] Fig. 11-2 is a graph showing temperature distributions of a main conductor and a return conductor according to a comparison example.

[Fig. 12] Fig. 12 is a longitudinal cross section with a partial cut-open plan view of a substantial part of a power direct-current coaxial cable according to a eighth embodiment, which is part of the invention.

[Fig. 13] Fig. 13 is a longitudinal cross section with a partial cut-open plan view of a substantial part of a power direct-current coaxial cable according to a ninth embodiment, which is part of the invention.

[Fig. 14] Fig. 14 is a longitudinal cross section with a partial cut-open plan view of a substantial part of a power direct-current coaxial cable according to a tenth embodiment, which is not part of the invention.

[Fig. 15] Fig. 15 is a longitudinal cross section with a partial cut-open plan view of a substantial part of a power direct-current coaxial cable according to an eleventh embodiment, which is not part of the invention.

[Fig. 16] Fig. 16 is a longitudinal cross section with a partial cut-open plan view of a substantial part of a power direct-current coaxial cable according to a twelfth embodiment, which is not part of the invention.

[Fig. 17] Fig. 17 is a lateral cross section of an example of a power direct-current coaxial cable.

[Fig. 18-1] Fig. 18-1 is a schematic diagram for explaining a conventional return-conductor connecting method for a direct-current coaxial cable.

[Fig. 18-2] Fig. 18-2 is a schematic diagram for explaining a conventional return-conductor connecting method for a direct-current coaxial cable.

[Fig. 18-3] Fig. 18-3 is a schematic diagram for explaining a conventional return-conductor connecting method for a direct-current coaxial cable.

The subject matter of claim 1 is described with reference to figures 1,3, 4-1 and 4-2.

EXPLANATIONS OF LETTERS OR NUMERALS

| 1, 1a to 1c | Main conductor |
| 2, 2a to 2c, 2ab | Inner semiconducting layer |
| 3, 3a to 3c | Main insulating layer |
| 4, 4a to 4c | Outer semiconducting layer |
| 5, 5a to 5c | Return conductor |
| 6 | Return inner semiconducting layer |
| 7, 7a to 7c | Return insulating layer |
| 8 | Return outer semiconducting layer |
| 9, 9a to 9c | Lead sheath |
| 0, 10a to 10c | Anticorrosion layer |
| 11 | Cable core |
| 12, 12a to 12c | Return-conductor wire |
| 13, 21 | Weld connecting portion |
| 22 | Reinforcing main insulating layer |
| 23, 23b, 23c | Buffer layer |
| 24a to 24e | Return-conductor wire bundle |
| 25, 25b, 25c | Welding portion |
| 26 | Joint-conductor wire bundle |
| 26a | Joint conductor |
| 27 | Copper tape |
| 28 | Outer semiconducting layer |

| 28a | Tapered end portion |
| 29 | Reinforcing return insulating layer |
| 30 | Lead sheath |
| 31 | Anticorrosion layer |
| 32 | Metallic layer |
| 121 | Sleeve |
| A to D | Direct-current coaxial cable |
| P, P1, P2 | Area |

BEST MODE(S) FOR CARRYING OUT THE INVENTION

Exemplary embodiments of a method of connecting a return conductor of a power direct-current coaxial cable and a connecting portion of the power direct-current coaxial cable according to the present invention are explained in detail below with reference to the accompanying drawings. It should be noted that the present invention is not limited to the embodiments.

(First Embodiment)

Fig. 1 is a longitudinal cross section with a partial cut-open plan view of a substantial part of a power direct-current coaxial cable to which a return-conductor connecting method according to a first embodiment. The direct-current coaxial cables A and B to be connected with each other have the same structure as the one shown in Fig. 17. Anticorrosion layers 10a and 10b, lead sheaths 9a and 9b, return insulating layers 7a and 7b, outer semiconducting layers 4a and 4b, and main insulating layers 3a and 3b are sequentially pilled so that main conductors 1a and 1b are exposed at distal ends of the cables, and then the main conductors 1a and 1b are weld connected with each other. A reference numeral 21 indicates a weld connecting portion of the main conductors 1a and 1b. The main conductors 1a and 1b and the weld connecting portion 21 are insulated by a reinforcing main insulating layer 22 that is formed across the main insulating layers 3a and 3b of both cables. Furthermore, on the outer semiconducting layer 4a of the direct-current coaxial cable A, a buffer layer 23 is formed with the outer diameter virtually same as that of the reinforcing main insulating layer 22. Return conductors 5a and 5b of both cables are connected with each other on the buffer layer 23. Details of the buffer layer 23 will be described later.

The connecting method according to the first embodiment for the return conductors 5a and 5b is illustrated in Fig. 2. In this connecting method, return-conductor wires 12a and 12b of the direct-current coaxial cables A and B are aligned in such a manner that a plurality of wires adjacent with each other to form return-conductor wire bundles 24a and 24b, and the distal ends of the return-conductor wire bundles 24a and 24b are weld connected on the buffer layer 23. A reference numeral 25 indicates a welding portion.

By adopting such a connecting method, it is possible to maintain a flatness of the return-conductor connecting portion and to suppress an occurrence of a local high electric-field area. In addition, compared with the conventional method of welding the return-conductor wires one by one, it is possible to shorten the welding time. In the case of not providing the buffer layer 23, the return-conductor wire bundles 24a and 24b can be welded on the outer semiconducting layer 4a, i.e., on the cable core of the direct-current coaxial cable A.

(Second Embodiment)

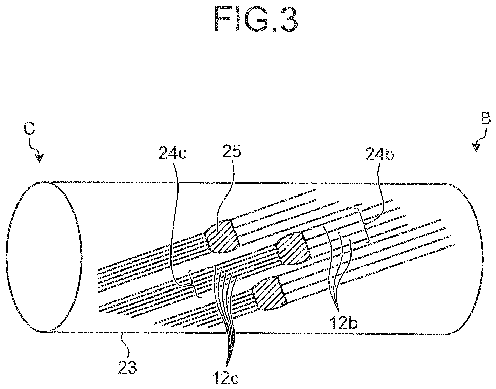

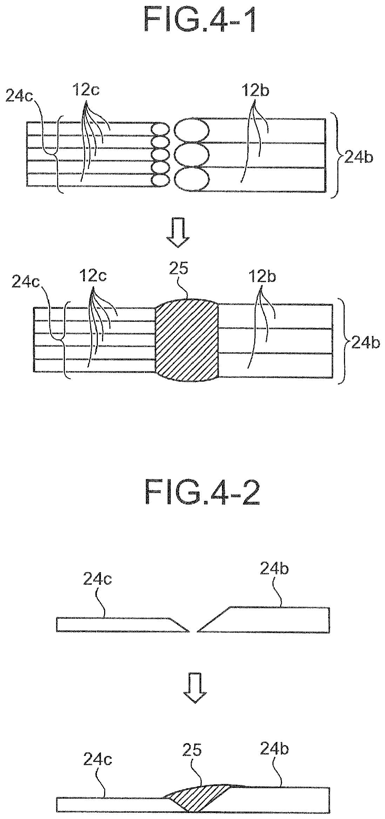

The first embodiment described above is for a case in which the number of wires and the wire diameters are the same between the return-conductor wires of direct-current coaxial cables to be connected with each other. However, the present invention makes it possible to connect the return conductors even when the return-conductor wires have different number of wires and different wire diameters. Fig. 3 is a schematic diagram for explaining a return-conductor connecting method according to a second embodiment when the number of wires and the wire diameters of the return-conductor wires are different with each other. In the second embodiment, the direct-current coaxial cable A in the first embodiment is replaced with a direct-current coaxial cable C having a different number of return-conductor wires and a different wire diameter. Other parts of the structure are the same as those shown in the first embodiment, and the same reference numerals are assigned to the same parts. In the second embodiment, the number of wires of return-conductor wire bundles 24b and 24c are adjusted so that the number of return-conductor wire bundles is the same between the direct-current coaxial cables B and C to be connected with each other. After that, return-conductor wires 12b and 12c are aligned by the adjusted number of wires adjacent with each other to form the return-conductor wire bundles 24b and 24c. Then, the distal ends of the return-conductor wire bundles 24b and 24c are weld connected on the buffer layer 23 as shown in Figs. 4-1 and 4-2. A reference numeral 25 indicates a welding portion.

(Third Embodiment)

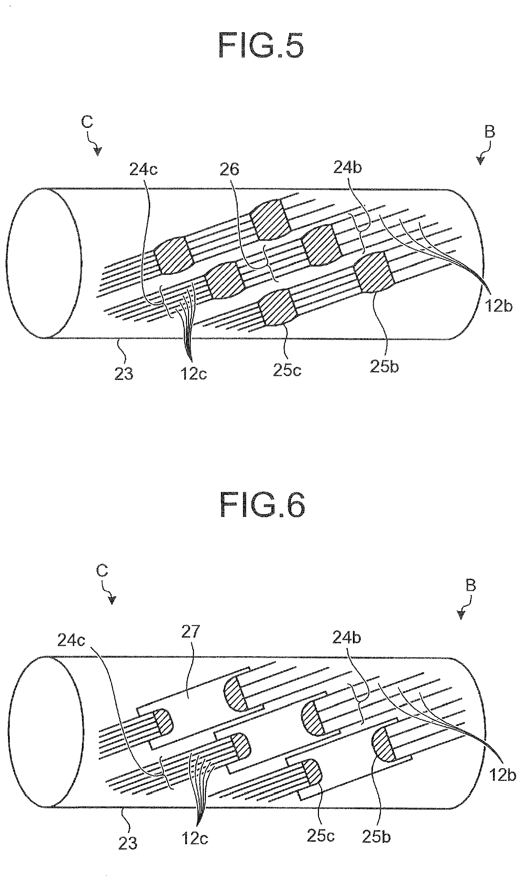

Fig. 5 is a schematic diagram for explaining a return-conductor connecting method according to a third embodiment. In this connecting method, a point is the same as the second embodiment described above, in which return-conductor wires 12b and 12c are aligned by the adjusted number of wires adjacent with each other to form the return-conductor wire bundles 24b and 24c. However, the distal ends of the return-conductor wire bundles 24b and 24c are connected with each other by respectively welding the distal ends of the return-conductor wire bundles 24b and 24c with a joint-conductor wire bundle 26 that is prepared separately.

In this return-conductor connecting method, compared with the method of directly welding the return-conductor wire bundles of the direct-current coaxial cable B and the direct-current coaxial cable C, a welding position of the distal ends of the return-conductor wire bundles can be easily adjusted. Furthermore, a connection is possible even when the structures (the wire diameter and the number of wires) of the return-conductor wire bundles to be connected with each other are different.

In this case, the cross-sectional area of the joint-conductor wire bundle 26 to be inserted is set to be equal to or larger than the cross-sectional area of the return-conductor wire bundle that is smaller between the direct-current coaxial cable B and the direct-current coaxial cable C to be connected with each other. This makes it possible to suppress a heat amount generated in the return-conductor connecting portion when a current is applied to the return conductor as low as or lower than a heat amount generated when the return-conductor wire bundles are directly welded.

(Fourth Embodiment)

Fig. 6 is a schematic diagram for explaining a return-conductor connecting method according to a fourth embodiment. A difference between the third embodiment and the fourth embodiment is that a copper tape 27 is employed as a joint conductor. Other parts of the structure are the same as those shown in Fig. 5, and the same reference numerals are assigned to the same parts. In this case, the cross-sectional area of the copper tape 27 to be inserted is also set to be equal to or larger than the cross-sectional area of the return-conductor wire bundle that is smaller between the direct-current coaxial cable B and the direct-current coaxial cable C to be connected with each other, to suppress a heat amount generated in the return-conductor connecting portion when a current is applied to the return conductor. In addition, a copper plate can be used instead of the copper tape 27.

(Fifth Embodiment)

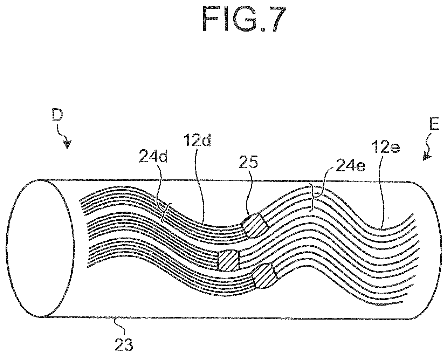

Fig. 7 is a schematic diagram for explaining a return-conductor connecting method according to a fifth embodiment. In the fifth embodiment, the direct-current coaxial cables A and B to be connected with each other in the first embodiment are replaced with direct-current coaxial cables D and E in which the return-conductor wires 12 are SZ stranded, respectively. In this case, return-conductor wires 12d and 12e of both of the direct-current coaxial cables D and E are also aligned in such a manner that a plurality of wires adjacent with each other to form return-conductor wire bundles 24d and 24e, and the distal ends of the return-conductor wire bundles 24d and 24e can be weld connected with each other. Although the distal ends of the return-conductor wire bundles 24d and 24e are directly welded in Fig. 7, even when the wires are SZ stranded, the distal ends of the return-conductor wire bundles 24d and 24e can also be connected with each other by respectively welding the distal ends of the return-conductor wire bundles 24d and 24e with a joint-conductor wire bundle that is prepared separately, as shown in Fig. 5 or Fig. 6.

Regarding a conductor cross-sectional area of the return-conductor wire bundles to be connected each other when connecting the direct-current coaxial cables, for example, it is preferable to set a "normalized cross-sectional area ratio of return-conductor wire bundles to be connected", which is defined by following Equation (1), in a range between 0.7 and 1.4.

[Numerical Expression 1]

Normalized cross-sectional area ratio of return-conductor wire bundles to be connected=cross-sectional area ratio of return-conductor wire bundles to be connected/total cross-sectional area ratio of return conductors                    (1)

The cross-sectional area ratio of return-conductor wire bundles to be connected and the total cross-sectional area ratio of return conductors in Equation (1) are obtained by Equation (2) and Equation (3), respectively.
[Numerical Expression 2]

$$
\begin{aligned}
&\texttt{Cross-sectional area ratio of return-conductor wire}\\
&\texttt{bundles to be connected=cross-sectional area of return-}\\
&\texttt{conductor wire bundles of second coaxial cable to be}\\
&\texttt{connected/cross-sectional area of return-conductor wire}\\
&\texttt{bundles of first coaxial cable to be connected} \qquad (2)
\end{aligned}
$$

[Numerical Expression 3]

$$
\begin{aligned}
&\texttt{Total cross-sectional area ratio of return}\\
&\texttt{conductors=total cross-sectional area of return conductor}\\
&\texttt{of second coaxial cable/total cross-sectional area of}\\
&\texttt{return conductor of first coaxial cable} \qquad (3)
\end{aligned}
$$

The reason for the above condition is as follows. In most cases, a good electrical contact cannot be obtained (an electric resistance is large) between adjacent return-conductor wire bundles in a direct-current coaxial cable connecting portion, and it is considered that there is very little current flowing through the adjacent return-conductor wire bundles. In this case, when the cross-sectional area ratio of return-conductor wire bundles of the first direct-current coaxial cable and the second direct-current coaxial cable to be connected with each other is entirely identical to a total cross-sectional area ratio of return conductors of the first direct-current coaxial cable and the second direct-current coaxial cable, a current value flowing through each of the return-conductor wires becomes identical to a current value flowing through each of the return-conductor wires when the whole return-conductor wires of the first direct-current coaxial cable and the second direct-current coaxial cable are collectively connected with each other (equivalent to a case in which an even current is flowing through each of the return-conductor wires), which can be considered as an ideal state. In other words, it is ideal that the "normalized cross-sectional area ratio of return-conductor wire bundles to be connected" defined by Equation (1) is 1.0 in the whole return-conductor wire bundles to be connected.

However, if the number of return-conductor wires is different as in the case of the direct-current coaxial cable B and the direct-current coaxial cable C, the "normalized cross-sectional area ratio of return-conductor wire bundles to be connected" cannot always be 1.0 for the whole return-conductor wire bundles to be connected, because the number of return-conductor wires is a natural number. In this case, the fact that the "normalized cross-sectional area ratio of return-conductor wire bundles to be connected" is deviated from 1.0 means that an unbalance occurs in the current value flowing through each of the return-conductor wires, and when an amount of deviation from 1.0 is large, the current is concentrated on some return-conductor wires or return-conductor wire bundles, resulting in a possibility of an abnormal heat generation. For this reason, it is necessary to determine a combination of return-conductor wire bundles in such a manner that the "normalized cross-sectional area ratio of return-conductor wire bundles to be connected" defined by Equation (1) becomes close to 1.0.

Table 1 shows an example of a result of temperature measurement at each of the return-conductor wires and the return-conductor wire bundle welding portion in the direct-current coaxial cable connecting portion when a rated current of 700 A is applied to the return conductor, when connecting the direct-current coaxial cable C having the cross-sectional area of the main conductor 400 mm$^2$ with the return-conductor wires of $\phi$2.6 mm x 55 wires (one-directional stranded with a total cross-sectional area of the return conductor 215 mm$^2$) with the direct-current coaxial cable B having the cross-sectional area of the main conductor 400 mm$^2$ with the return-conductor wires of $\phi$4.6 mm x 31 wires (one-directional stranded with a total cross-sectional area of the return conductor 405 mm$^2$) .

[Table 1]

Table 1

| | | | | |
|---|---|---|---|---|
| Combination of return-conductor wire bundles to be connected | Direct-current coaxial cable C φ2.6 mm X total 55 wires | Number of wires | 5 | 5 |
| | | Width of wire bundle (mm) | 13.0 | 13.0 |
| | | Measured temperature of wire (°C) | 35.2 to 35.7 | 35.4 to 35.5 |
| | Direct-current coaxial cable B φ4.6 mm x total 31 wires | Number of wires | 3 | 2 |
| | | Width of wire bundle (mm) | 13.8 | 9.2 |
| | | Measured temperature of wire (°C) | 29.3 to 30.4 | 29.9 to 30.4 |
| Measured temperature of return-conductor wire bundle welding portion (°C) | | | 30.4 to 31.3 | 30.0 |
| Number of connections | | | 9 points | 2 points |
| Normalized cross-sectional area ratio of return-conductor wire bundles to be connected | | | 1. 07 | 0.71 |
| Difference between widths of return-conductor wire bundles to be connected (mm) | | | 0.8 | 3.8 |

In the above example, the number of connection points of the return-conductor wire bundles is 11 points, where the combination of the return-conductor wire bundles of the direct-current coaxial cable C and the direct-current coaxial cable B includes nine points of a combination of φ2.6 mm x 5 wires and φ4.6 mm x 3 wires and two points of a combination of φ2.6 mm x 5 wires and φ4.6 mm x 2 wires. In this case, the "normalized cross-sectional area ratio of return-conductor wire bundles to be connected" is 1.07 with the combination of φ2.6 mm x 5 wires and φ4.6 mm x 3 wires, and 0.71 with the combination of φ2.6 mm x 5 wires and φ4.6 mm x 2 wires. At this time, a temperature difference between the return-conductor wires at the direct-current coaxial cable connecting portion is 0.5°C on a side of the direct-current coaxial cable C and 1.1°C on a side of the direct-current coaxial cable B, and a temperature difference at each of the return-conductor wire bundle welding portions is 1.3°C, with which it can be confirmed that there is no abnormal temperature rise. Namely, there is no abnormal temperature rise even when the "normalized cross-sectional area ratio of return-conductor wire bundles to be connected" is 0.71. Furthermore, a replacement of the numerator and the denominator in each of Equation (2) and Equation (3) does not cause any problem. If the direct-current coaxial cable C and the direct-current coaxial cable B are replaced with each other in Table 1, the "normalized cross-sectional area ratio of return-conductor wire bundles to be connected" is 0.93 (=1/1.07) with a combination of φ4.6 mm x 3 wires and φ2.6 mm x 5 wires and 1.41 (1/0.71) with a combination of φ4.6 mm x 2 wires and φ2.6 mm x 5 wires. From this result, it can be said that an abnormal heat generation can be suppressed at the direct-current coaxial cable connecting portion when a current is applied to the return conductor, if the "normalized cross-sectional area ratio of return-conductor wire bundles to be connected" is in a range between 0.7 and 1.4.

However, if the number of wires and the diameter of the return-conductor wires of the direct-current coaxial cables to be connected with each other are different, when the wires are arranged being adjacent with each other as shown in Fig. 4-1, there is a case in which a width of the return-conductor wire bundle (for example, when the cross section of the wire is circular, width of wire bundle=diameter of wire×number of wires) is different between the return-conductor wire bundles to be connected with each other. When the widths of the return-conductor wire bundles are different with each other, according to the invention a difference between the widths (hereinafter, "difference of width between return-conductor wire bundles to be connected") is smaller than two times of wire diameter which is larger between the return-conductor wire bundles to be connected. By doing this, it is possible to clear wires that are not entirely overlapped when the wire bundles to be welded are jointed with each other, which makes it possible to make the welding operation easy and to prevent an abnormal heat generation at the return-conductor wire bundle connecting portion when a current is applied to the return conductor.

In addition, it is possible to have the return-conductor wire bundles one-directionally stranded at the direct-current coaxial cable connecting portion (Fig. 2, Fig. 3, Fig. 5, and Fig. 6). For example, when the return-conductor wires of the direct-current coaxial cables to be connected with each other are stranded in one direction, it is possible to obtain electromagnetic shield characteristics, flexibility, and heat generation distribution of the return conductor equal to or close to those of the cable portion by making the structure of the return-conductor wire bundles of the direct-current coaxial cable connecting portion the same as the structure of the cable. Furthermore, even when the return-conductor wires of both cables to be connected with each other are SZ stranded, it is possible to strand the return-conductor wire bundles of in one direction at the cable connecting portion. Moreover, even when the return-conductor wires of the first cable to be connected are stranded in one direction while the return-conductor wires of the second cable are SZ stranded, it is possible to strand the return-conductor wire bundles in one direction at the cable connecting portion.

In addition, it is also possible to have the return-conductor wire bundles SZ stranded at the direct-current coaxial cable connecting portion (Fig. 7). For example, when the return-conductor wires of the direct-current coaxial cables to be connected with each other are SZ stranded, it is possible to obtain electromagnetic shield characteristics, flexibility, and heat generation distribution of the return conductor equal to or close to those of the cable portion by making the structure of the return-conductor wire bundles of the direct-current coaxial cable connecting portion the same SZ stranded structure as the cable. Furthermore, even when the return-conductor wires or both cables to be connected with each other are stranded in one direction, it is possible to make the return-conductor wire bundles at the cable connecting portion SZ stranded. Moreover, even when the return-conductor wires of the first cable to be connected are SZ stranded while the return-conductor wires of the second cable are stranded in one direction, it is possible to make the return-conductor wire bundles SZ stranded at the cable connecting portion.

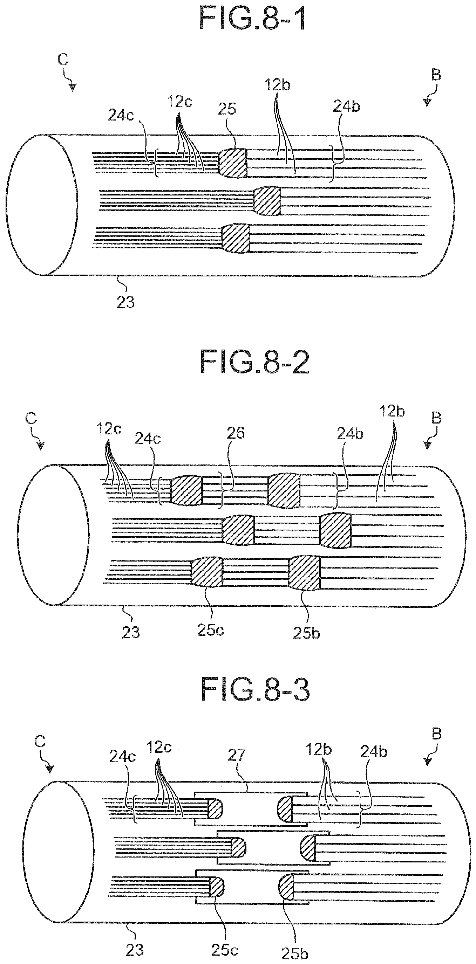

In addition, as modification examples of the second to the fourth embodiments, the return-conductor wire bundles 24b and 24c can be arranged in a line in the longitudinal direction of the cable and evenly in the circumferential direction at the direct-current coaxial cable connecting portion, as shown in Figs. 8-1 to 8-3. Fig. 8-1, Fig. 8-2, and Fig. 8-3 are corresponding to Fig. 3, Fig. 5, and Fig. 6, respectively, and because the same reference numerals are assigned to the same parts, detailed explanations of the parts will be omitted. By arranging the return-conductor wire bundles as those shown in Figs. 8-1 to 8-3 at the direct-current coaxial cable connecting portion, a symmetry of the return-conductor wire bundles in the direct-current coaxial cable connecting portion can be assured in the circumferential direction. Furthermore, generation of a local high electric-field area and a leak electromagnetic field can be suppressed. The arrangement of the return-conductor wire bundles at the cable connecting portion as shown in Figs. 8-1 to 8-3 can be applied when, for example, the return-conductor wires of the cables to be connected with each other are stranded in one direction or SZ stranded. Moreover, it can also be applied even when the return-conductor wires of the first cable to be connected are stranded in one direction while the return-conductor wires of the second cable are SZ stranded.

Now, details of the buffer layer 23 are explained below. A plurality of return-conductor wire bundle connecting points are distributed in the longitudinal direction and the circumferential direction of the cable connecting portion, and it is preferable to provide the buffer layer 23 between the outer semiconducting layer of the cable core including the area where the wire bundle connecting points are distributed and the return conductor, as shown in Fig. 1, to prevent a physical damage on the cable core at the time of performing a return-conductor connecting operation and to prevent a heat generated when welding the return conductors from causing a thermal damage on the cable core. The buffer layer 23 is formed by, for example, winding a semiconducting cushion tape on the outer semiconducting layer of the cable core. Alternatively, a tape or a sheet having electrical insulating property (for example, a tape or a sheet of fluoride resin base, silicone rubber base, or ethylene-propylene rubber base) can be used. The thermal damage and the physical damage on the main insulating layer 3a and the outer semiconducting layer 4a of the cable can be prevented by welding the return-conductor wire bundles 24a and 24b with each other on the buffer layer 23 formed in the above manner.

As shown in Fig. 1, the buffer layer 23 can be formed by arranging the connecting points of the return-conductor wire bundles 24a and 24b on one of the cables, for example, on the main insulating layer 3a (including the outer semiconducting layer 4a) of the direct-current coaxial cable A and winding the semiconducting cushion tape between the outer semiconducting layer 4a and the return-conductor wire bundle 24a up to virtually the same diameter as the reinforcing main insulating layer 22 over a range from the main insulating layer 3a including an area P where the connecting points of the return-conductor wire bundle 24a are distributed to the reinforcing main insulating layer 22 of the cable. Because there is a difference of diameter between the main insulating layer 3a and the reinforcing main insulating layer 22 of the cable, it is possible to form the buffer layer 23 for preventing the thermal damage and the physical damage on the main insulating layer 3a and the outer semiconducting layer 4a of the cable when performing the return-conductor connecting operation, by using the difference of diameter.

Typically, the difference of diameter between the main insulating layer and the reinforcing main insulating layer 22 of the cable is about 6 mm to 40 mm, and a thickness of the buffer layer formed by winding the semiconducting cushion tape becomes about 3 mm to 20 mm. A winding thickness of the semiconducting cushion tape necessary for preventing the thermal damage caused by the heat generated when welding the return-conductor wire bundles should be equal to or thicker than 3 mm, and the winding thickness of the semiconducting cushion tape is enough to prevent the physical damage on the main insulating layer and the outer semiconducting layer of the cable when connecting the return conductors. However, it is preferable that the outer diameter of the buffer layer 23 formed on the main insulating layer 3a of the cable should be the same as the outer diameter of the reinforcing main insulating layer 22.

Now, embodiment examples are explained below. The direct-current coaxial cable used in the examples is the same as the one shown in Fig. 17, in which an inner semiconducting layer 2, a main insulating layer 3 formed with cross-linked polyethylene, and the outer semiconducting layer 4 are sequentially formed on the main conductor 1 of the cable. Typically, the inner semiconducting layer 2, the main insulating layer 3, and the outer semiconducting layer 4 are formed by the simultaneous extrusion method, and it is integrally formed between the inner semiconducting layer 2 and the main insulating layer 3 formed with cross-linked polyethylene and between the main insulating layer 3 and the outer semiconducting layer 4. A return conductor 5 is provided on the outer circumference of the outer semiconducting layer 4, which is formed by stranding a plurality of copper wires (return-conductor wires) in one direction. The return insulating layer 7 formed with polyethylene is provided on the return conductor 5 as an insulating layer of the return conductor via a return inner semiconducting layer 6, and a return outer semiconducting layer 8, a lead sheath 9, and an anticorrosion layer 10 are sequentially provided on the return insulating layer 7. It is a matter of course that the application of the return-conductor connecting method is not limited to the structure of the direct-current coaxial cable shown in Fig. 17.

A first embodiment example is for a case in which direct-current coaxial cables X and Y having the cross-sectional area of the main conductor 400 mm$^2$ with the return-conductor wires of $\phi$2.6 mm x 55 wires (one-directional stranded with a total cross-sectional area of the return conductor 215 mm$^2$) are connected with each other (the direct-current coaxial cable X and the direct-current coaxial cable Y to be connected have the same structure). In a similar manner to the one shown in Fig. 1, the main conductors are weld connected with each other, and the main insulating layers are connected by the reinforcing main insulating layer formed by a heating mold process after winding an insulating tape, on which the outer semiconducting layer is formed. After winding the semiconducting cushion tape on the outer semiconducting layer on the main insulating layer and the reinforcing main insulating layer of the cable (thickness of about 1 mm to 2 mm), the buffer layer is provided in a range including the welding area of the return-conductor wire bundles, to prevent the physical damage and the thermal damage at the time of performing the return-conductor connecting operation. The buffer layer is formed by winding the semiconducting cushion tape, and its thickness is about 5 mm. Both of the return-conductor wire bundles of the direct-current coaxial cable X and the direct-current coaxial cable Y are formed with $\phi$2.6 mm x 55 return-conductor wires, with 11 return-conductor wire bundles on each side. These return-conductor wire bundles are stranded in one direction, and weld connected bundle by bundle on the buffer layer, in the similar manner to the one shown in Fig. 2. At this time, the "normalized cross-sectional area ratio of return-conductor wire bundles to be connected" defined by Equation (1) is 1.0 at each of the connecting points. Furthermore, the "difference of width between return-conductor wire bundles to be connected" is zero at each of the connecting points.

A second embodiment example is for a case in which a direct-current coaxial cable X having the cross-sectional area of the main conductor 400 mm$^2$ with the return-conductor wires of $\phi$2.6 mm x 55 wires (one-directional stranded with a total cross-sectional area of the return conductor 215 mm$^2$) and a direct-current coaxial cable Z having the cross-sectional area of the main conductor 500 mm$^2$ with the return-conductor wires of $\phi$5.0 mm x 30 wires (one-directional stranded with a total cross-sectional area of the return conductor 463 mm$^2$) are connected with each other. The main conductors are connected with each other in a compressed manner using a sleeve for connecting conductors of different diameters, and the main insulating layers are connected by the reinforcing main insulating layer formed by a heating mold process after winding an insulating tape, on which the outer semiconducting layer is formed. After winding the semiconducting cushion tape on the outer semiconducting layer on the main insulating layer and the reinforcing main insulating layer of the cable (thickness of about 1 mm to 2 mm), the buffer layer is provided in a range including the welding area of the return-conductor wire bundles, to prevent the physical damage and the thermal damage at the time of performing the return-conductor connecting operation. The buffer layer is formed by winding the semiconducting cushion tape, and its thickness is about 13 mm. To reduce an amount of heat generation at the direct-current coaxial cable connecting portion when a current is applied to the return conductor, the connection position of the return-conductor wire bundles is located on the cable core on a side of the direct-current coaxial cable X having the smaller return-conductor cross-sectional area. The number of connection points of the return-conductor wire bundles is a total of 13 points as shown in Table 2. The configuration of the return-conductor wire bundles of the direct-current coaxial cable X includes four sets of bundle of $\phi$2.6 mm x 5 wires, eight sets of bundle of $\phi$2.6 mm x 4 wires, and one set of bundle of $\phi$2.6 mm x 3 wires, and the configuration of the return-conductor wire bundles of the direct-current coaxial cable Z includes four sets of bundle of $\phi$5.0 mm x 3 wires and nine sets of bundle of $\phi$5.0 mm x 2 wires. A combination of the return-conductor wire bundles to be connected includes four points of a combination of a bundle of $\phi$2.6 mm x 5 wires and a bundle of $\phi$5.0 mm x 3 wires, eight points of a combination of a bundle of $\phi$2.6 mm x 4 wires and a bundle of $\phi$5.0 mm x 2 wires, and one point of a combination of a bundle of $\phi$2.6 mm x 3 wires and a bundle of $\phi$5.0 mm x 2 wires. The above return-conductor wire bundles are stranded in one direction as shown in Fig. 3, and are weld connected bundle by bundle on the buffer layer as shown in Fig. 1. At this time, the "normalized cross-sectional area ratio of return-conductor wire bundles to be connected" defined by Equation (1) and the "difference of width between return-conductor wire bundles to be connected" at each of the connecting points are as shown in Table 2, satisfying the conditions that "normalized cross-sectional area ratio of return-conductor wire bundles to be connected" should be in a range between 0.7 and 1.4 and the "difference of width between return-conductor wire bundles to be connected" should be smaller than two times of "wire diameter which is larger between the return-conductor wire bundles to be connected".

[Table 2]

Table 2

| Combinatio n of return-conductor wire bundles to be connected | Direct-current coaxial cable X φ2.6 mm x total 55 wires | Number of wires | 5 | 4 | 3 |
| | | Width of wire bundle (mm) | 13.0 | 10.4 | 7.8 |
| | Direct-current coaxial cable Z φ5.0 mm x total 30 wires | Number of wires | 3 | 2 | 2 |
| | | Width of wire bundle (mm) | 15.0 | 10.0 | 10.0 |
| Number of connections | | | 4 points | 8 points | 1 points |
| Normalized cross-sectional area ratio of return-conductor wire bundles to be connected | | | 1.10 | 0.92 | 1.23 |
| Difference between widths of return-conductor wire bundles to be connected (mm) | | | 2.0 | 0.4 | 2.2 |

(Sixth Embodiment)

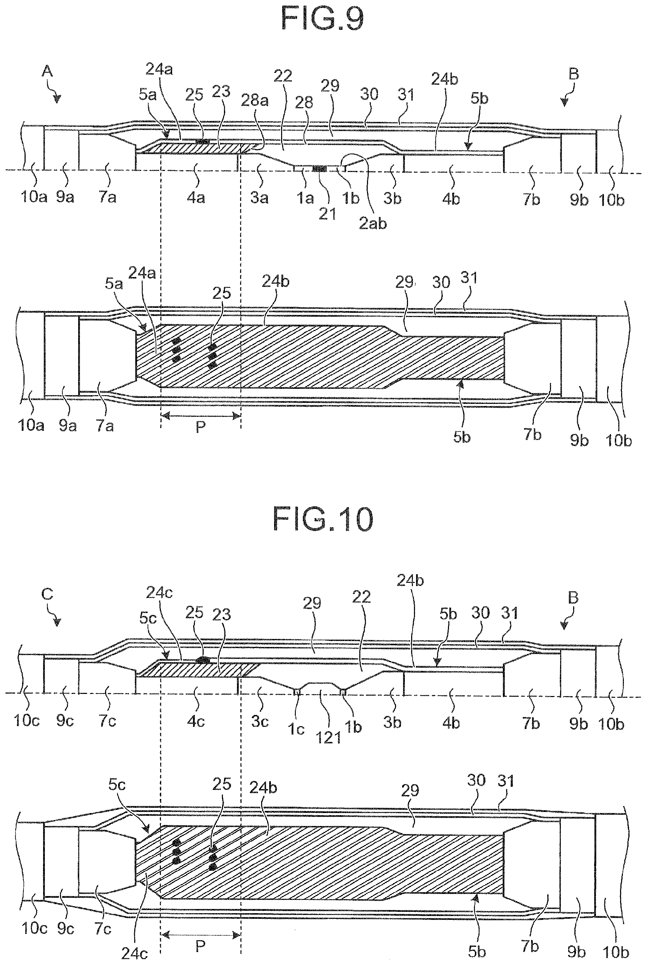

Fig. 9 is a longitudinal cross section with a partial 5 cut-open plan view of a substantial part of a power direct-current coaxial cable to which a return-conductor connecting method according to a sixth embodiment is applied. In direct-current coaxial cables A and B to be connected with each other, the anticorrosion layers 10a and 10b, the lead sheaths 9a and 9b, the return insulating layers 7a and 7b (the semiconducting layers on inside and outside are not shown), the outer semiconducting layers 4a and 4b, the main insulating layers 3a and 3b, and inner semiconducting layers (not shown) are sequentially removed so that the main conductors 1a and 1b are exposed at distal ends of the cables, and then the main conductors 1a and 1b are weld connected with each other. A reference numeral 21 indicates a weld connecting portion of the main conductor 1. A reference numeral 2ab indicates an inner semiconducting layer at a connecting portion that is formed across the weld connecting portion 21 and the inner semiconducting layers (not shown) of the cable on both sides, and a reference numeral 22 indicates a reinforcing main insulating layer formed across the inner semiconducting layer 2ab and the main insulating layers 3a and 3b on both sides, and a reference numeral 28 indicates an outer semiconducting layer formed across the reinforcing main insulating layer 22 and the outer semiconducting layer 4 of the cable on both sides.

In the sixth embodiment, a welding connection of the return conductor 5a is performed at an area P where the outer semiconducting layer 4a of the direct-current coaxial cable A is exposed, and the buffer layer 23 is provided in the area P. The buffer layer 23 is formed to be across the outer semiconducting layer 4a of the direct-current coaxial cable A and the outer semiconducting layer 28 of the connecting portion. It is preferable that the buffer layer 23 should be formed by winding the semiconducting cushion tape. Alternatively, a tape or a sheet having electrical insulating property (for example, a tape or a sheet of fluoride resin base, silicone rubber base, ethylene-propylene rubber base, or butyl rubber base) can be used. It is preferable that the buffer layer 23 should be formed by winding the semiconducting cushion tape so that its outer diameter becomes the same as the maximum diameter portion of the outer semiconducting layer 28 of the connecting portion from the outer semiconducting layer 4a of the cable to a tapered end portion 28a of the outer semiconducting layer 28 of the connecting portion. Typically, the difference of diameter between the main insulating layer and the reinforcing main insulating layer of the cable is about 6 mm to 40 mm, and a thickness of the buffer layer formed by winding the semiconducting cushion tape becomes about 3 mm to 20 mm. A winding thickness of the semiconducting cushion tape necessary for preventing the thermal damage caused by the heat generated when welding the return-conductor wire bundles should be equal to or thicker than 3 mm, and the winding thickness of the semiconducting cushion tape is enough to prevent the thermal damage on the outer semiconducting layer and the main insulating layer of the cable at the time of performing a return-conductor welding operation, and at the same time, enough to prevent the physical damage, too.

After forming the buffer layer 23 as described above, a welding connection of the return conductors 5a and 5b of both cables is conducted on the buffer layer 23. A reference numeral 25 indicates a welding portion of the return conductor 5. Because the buffer layer 23 is formed on the outer semiconducting layer 4a of the direct-current coaxial cable A, there is no worry about causing a thermal damage on the outer semiconducting layer 4a and the main insulating layer 3a, and the outer semiconducting layer 28 and the reinforcing main insulating layer 22 of the connecting portion by the heat generated when welding the return conductors 5a and 5b. In addition, by providing the buffer layer 23, it is also possible to prevent a tool or the like from causing a mechanical damage on the outer semiconducting layer 4a, the main insulating layer 3a, and the like, when welding the return conductors 5a and 5b. Furthermore, by providing the buffer layer 23 with the constant outer diameter from the outer semiconducting layer 4a of the cable to the outer semiconducting layer 28 of the connecting portion, as described above, it is possible to perform the operation of weld connecting the return conductors with ease, and at the same time, to suppress the outer diameter of entire cable connecting portion.

When weld connecting the return conductors 5a and 5b with each other, the return-conductor wires can be welded one by one; however, as shown in the first to the fifth embodiments, a plurality of return-conductor wires can be bundled for each of the direct-current coaxial cables A and B, so that the bundles are directly welded in a butt jointing manner or weld connected via a joint conductor. This makes it possible to reduce the number of welding operations and to perform the welding operation with efficiency. When the structures (the wire diameter and the number of wires) of the return conductors are different with each other, the connection via the joint conductor is easy; however, by appropriately configuring the wire bundles, a connection by the direct welding in a butt jointing manner can also be employed.

A connecting operation after weld connecting the return conductors 5a and 5b is the same as the conventional operation. In other words, a reinforcing return insulating layer 29 is formed across the return insulating layers 7a and 7b of both cables, and then a lead sheath 30 and an anticorrosion layer 31 can be formed. On the inner side of the reinforcing return insulating layer 29, a return inner semiconducting layer of the connecting portion is formed across the return inner semiconducting layers of both of the direct-current coaxial cables A and B, and on the outer side of the reinforcing return insulating layer 29, a return outer semiconducting layer of the connecting portion is formed across the return outer semiconducting layers of both cables, although they are not shown in the figure.

The return-conductor connecting method according to the present invention is not limited to the direct-current coaxial cable, but can also be applied to a connection of outer conductors at a connecting portion of alternate-current power cables having outer conductors such as a wire shield or the like.

Now, a third embodiment example is explained below. The direct-current coaxial cable used in the examples is the same as the one shown in Fig. 17, in which an inner semiconducting layer 2, a main insulating layer 3 formed with cross-linked polyethylene, and the outer semiconducting layer 4 are sequentially formed on the main conductor 1 of the cable. Typically, the inner semiconducting layer 2, the main insulating layer 3, and the outer semiconducting layer 4 are formed by the simultaneous extrusion method, and it is integrally formed between the inner semiconducting layer 2 and the main insulating layer 3 and between the main insulating layer 3 and the outer semiconducting layer 4. A return conductor 5 is provided on the outer circumference of the outer semiconducting layer 4, which is formed by stranding a plurality of copper wires (return-conductor wires) in one direction. The return insulating layer 7 formed with polyethylene is provided on the return conductor 5 as an insulating layer of the return conductor via a return inner semiconducting layer 6, and a return outer semiconducting layer 8, a lead sheath 9, and an anticorrosion layer 10 are sequentially provided on the return insulating layer 7. It is a matter of course that the application of the return-conductor connecting method is not limited to the structure of the direct-current coaxial cable shown in Fig. 17.

The third embodiment example is for a case in which direct-current coaxial cables X and Y having the cross-sectional area of the main conductor 400 $mm^2$ with the return-conductor wires of $\phi$2.6 mm x 55 wires (one-directional stranded with a total cross-sectional area of the return conductor 215 $mm^2$) are connected with each other (the direct-current coaxial cable X and the direct-current coaxial cable Y to be connected have the same structure). In a similar manner to the one shown in Fig. 9, the main conductors are weld connected with each other, and the main insulating layers are connected by the reinforcing main insulating layer formed by a heating mold process after winding an insulating tape, on which the outer semiconducting layer is formed. In this example, the outer diameter of the outer semiconducting layer of the cable is $\phi$53.8 mm, the outer diameter of the outer semiconducting layer of the connecting portion is $\phi$63.8 mm, and the difference of outer diameter between both of the outer semiconducting layers is 10 mm (difference of outer radius is 5 mm) .

After that, a semiconducting cushion tape is wound by about one rotation across a range between on the outer semiconducting layer of the direct-current coaxial cable X and on the outer semiconducting layer of the connecting portion, and then the semiconducting cushion tape is wound from the outer semiconducting layer of the cable to the tapered end portion 28a of the outer semiconducting layer of the connecting portion, including at least the welding area of the return conductors, so that a buffer layer of a thickness of about 5 mm is formed. This buffer layer is for preventing a thermal damage on the outer semiconducting layer and the main insulating layer of the cable and the outer semiconducting layer and the reinforcing main insulating layer of the connecting portion at the time of performing the return-conductor welding operation, and at the same time, for preventing a physical damage, too. The buffer layer is formed using the difference of outer radius (5 mm) between the outer semiconducting layer of the cable and the outer semiconducting layer of the connecting portion. The thickness of the buffer layer can be set to a little larger than the difference of outer radius. A winding thickness of the semiconducting cushion tape necessary for preventing the thermal damage caused by the heat generated when welding the return-conductors should be equal to or thicker than 3 mm, and the thickness of the buffer layer of 5 mm is enough to prevent the thermal damage at the time of performing the return-conductor welding operation and to prevent the physical damage.

The return conductors of the direct-current coaxial cables X and Y are weld connected bundle by bundle of a plurality of return-conductor wires on the buffer layer in a similar manner to the one shown in Fig. 2. Both of the return-conductor wire bundles are formed with return-conductor wires of $\phi$2.6 mm x 5 wires, and the number of weld connecting points of the return-conductor wire bundles is 11 points.

As described above, by providing the buffer layer using the difference of diameter between the outer semiconducting layer of the cable and the outer semiconducting layer of the connecting portion, it is possible to reduce the outer diameter of the direct-current coaxial cable connecting portion. Moreover, the workability of the return-conductor connection is better when the winding diameter of the semiconducting cushion tape is the same across a range between the outer semiconducting layer of the connecting portion and the outer semiconducting layer of the cable.

(Seventh Embodiment)

Fig. 10 is a longitudinal cross section with a partial cut-open plan view of a substantial part of a power direct-current coaxial cable. In direct-current coaxial cables B and C to be connected with each other, anticorrosion layers 10b and 10c, lead sheaths 9b and 9c, and return insulating layer 7b and 7c (the semiconducting layers on inside and outside are not shown) are sequentially pilled so that the return conductors 5b and 5c are exposed, and outer semiconducting layers 4b and 4c, main insulating layers 3b and 3c, and the inner semiconducting layers (not shown) are sequentially pilled so that main conductors 1b and 1c are exposed at distal ends of the cables. The cross-sectional area of the return conductor 5c of the direct-current coaxial cable C is smaller than the cross-sectional area of the return conductor 5b of the direct-current coaxial cable B.

The main conductor 1c of the direct-current coaxial cable C and the main conductor 1b of the direct-current coaxial cable B are connected with each other in a compressed manner using a sleeve 121 for connecting conductors of different diameters. A reference numeral 22 indicates a reinforcing main insulating layer formed across the sleeve 121 and the main insulating layers 3b and 3c of the direct-current coaxial cables B and C on both sides, and a reference numeral 23 indicates a buffer layer formed on the outer semiconducting layer 4c of the direct-current coaxial cable C.

The return conductor 5b of the direct-current coaxial cable B reaches on the buffer layer 23 by passing the outer circumference of the reinforcing main insulating layer 22, and is weld connected to the return conductor 5c of the direct-current coaxial cable C on the buffer layer 23. A reference numeral 25 indicates a welding portion.

The buffer layer 23 is for preventing a damage on the outer semiconducting layer 4c and the main insulating layer 3c of the direct-current coaxial cable C by the heat generated at the time of performing the return-conductor welding operation. It is preferable that the buffer layer 23 should be formed by winding a semiconducting cushion tape so that its outer diameter becomes virtually the same as the outer diameter of the reinforcing main insulating layer from the outer semiconducting layer 4c to the outer semiconducting layer (not shown) of the connecting portion. The buffer layer 23 can also prevent a physical damage on the outer semiconducting layer 4c and the main insulating layer 3c of the direct-current coaxial cable C at the time of performing the return-conductor welding operation.

When weld connecting the return conductors 5b and 5c with each other, the return-conductor wires can be welded one by one; however, as described above, a plurality of return-conductor wires can be bundled, so that the bundles are weld connected with each other. By welding the bundles with each other, the number of welding operations can be reduced, and the welding operation can be performed with efficiency.

After weld connecting the return conductors 5b and 5c as described above, the reinforcing return insulating layer 29 is formed across the return insulating layer 7b and 7c of both cables, and then a lead sheath 30 and the anticorrosion layer 31 can be sequentially formed. On the inner side of the reinforcing return insulating layer 29, a return inner semiconducting layer of the connecting portion is formed across the return inner semiconducting layers of both of the direct-current coaxial cables B and C, and on the outer side of the reinforcing return insulating layer 29, a return outer semiconducting layer of the connecting portion is formed across the return outer semiconducting layers of both cables, although they are not shown in the figure.

In the direct-current coaxial cable connecting portion configured as described above, the cross-sectional area of the return conductor becomes large at most parts of the connecting portion in the longitudinal direction (return-conductor resistance becomes small); and therefore, it is possible to suppress an amount of heat generation by a current application to the return conductors 5b and 5c, making it possible to suppress a temperature rise at the connecting portion.

More detailed configuration of the direct-current coaxial cable connecting portion shown in Fig. 10 is explained below. The direct-current coaxial cable C has, for example, the cross-sectional area of the main conductor of 400 mm$^2$ with the cross-sectional area of the return conductor 215 mm$^2$ (copper wires of $\phi$2.6 mm x 55 wires coaxially stranded), and the direct-current coaxial cable B has, for example, the cross-sectional area of the main conductor 500 mm$^2$ with

the cross-sectional area of the return conductor 463 mm$^2$ (copper wires of $\phi$5.0 mm x 30 wires coaxially stranded). The main conductors 1b and 1c of both of the direct-current coaxial cables B and C are copper wires, the main insulating layers 3b and 3c are formed with cross-linked polyethylene, and the return insulating layers 7b and 7c are formed with noncross-linked polyethylene. The reinforcing main insulating layer 22 is formed by a heating mold process after winding an insulating tape. The buffer layer 23 is formed by winding a semiconducting cushion tape with a thickness of about 13 mm. The return conductors 5b and 5c of the direct-current coaxial cables B and C are weld connected bundle by bundle of a plurality of return-conductor wires, and the number of weld connecting points of the return-conductor wire bundles is 13 points. The configuration of the return-conductor wire bundles of the direct-current coaxial cable C includes four sets of bundle of $\phi$2.6 mm x 5 wires, eight sets of bundle of $\phi$2.6 mm x 4 wires, and one set of bundle of $\phi$2.6 mm x 3 wires. The configuration of the return-conductor wire bundles of the direct-current coaxial cable B includes four sets of bundle of $\phi$5.0 mm x 3 wires and nine sets of bundle of $\phi$5.0 mm x 2 wires. A combination of the return-conductor wire bundles to be connected includes four points of a combination of a bundle of $\phi$2.6 mm x 5 wires and a bundle of $\phi$5.0 mm x 3 wires, eight points of a combination of a bundle of $\phi$2.6 mm x 4 wires and a bundle of $\phi$5.0 mm x 2 wires, and one point of a combination of a bundle of $\phi$2.6 mm x 3 wires and a bundle of $\phi$5.0 mm x 2 wires.

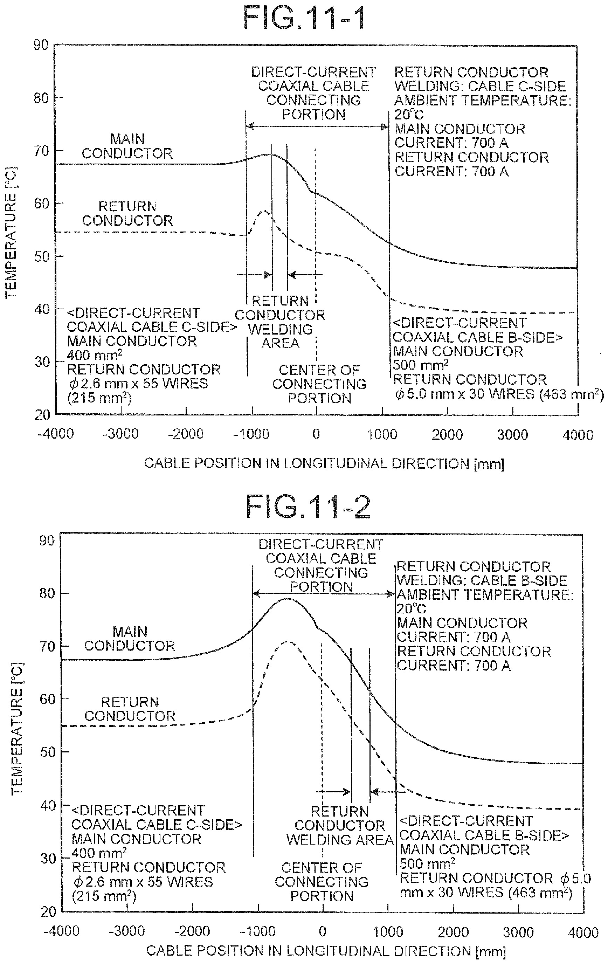

With the above configuration, a result of calculation of main-conductor temperature distribution and return-conductor temperature distribution when a current of 700 A is applied to each of the main conductor and the return conductor is shown in Figs. 11-1 and 11-2, for a case in which the connecting portion of the return conductors is located on the outer circumference of the outer semiconducting layer of the direct-current coaxial cable C (the fourth embodiment example) and a case in which it is located on the outer circumference of the outer semiconducting layer of the direct-current coaxial cable B (a comparison example). According to the calculation result, the temperature of the main conductor at the direct-current coaxial cable connecting portion is 70°C in the fourth embodiment example (Fig. 11-1), and 80°C in the comparison example (Fig. 11-2). From this point, according to the present invention, the temperature rise of the main conductor can be reduced by about 10°C because the amount of heat generated by the current application to the return conductor can be suppressed in the connecting portion.

(Eighth Embodiment)

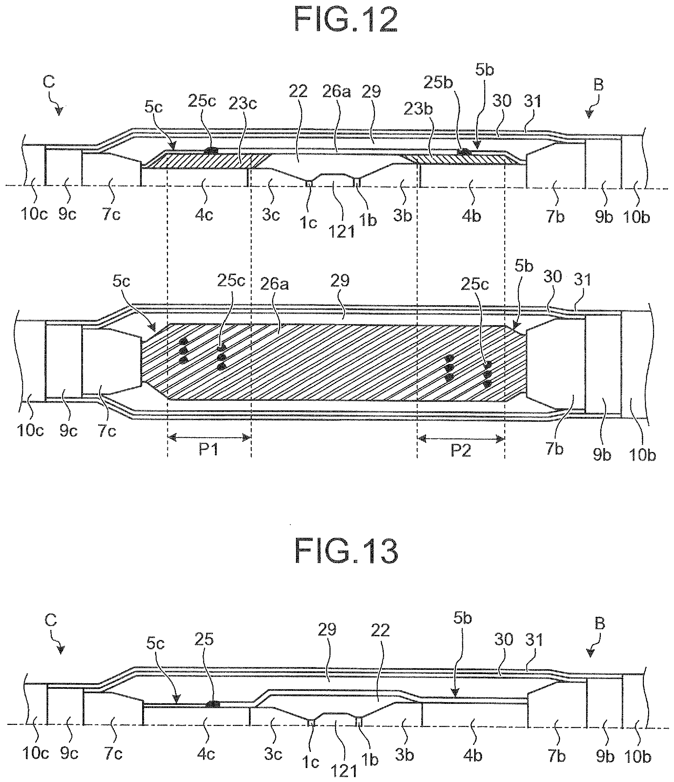

Fig. 12 is a longitudinal cross section with a partial cut-open plan view of a substantial part of a power direct-current coaxial cable according to a eighth embodiment. In the direct-current coaxial cable connecting portion, the return conductor 5c of a direct-current coaxial cable C of which the cross-sectional area of the return conductor is small and the return conductor 5b of a direct-current coaxial cable B of which the cross-sectional area of the return conductor is large are connected with each other via a joint conductor 26a. The joint conductor 26a is formed with the same copper wire as that constitutes the return conductors 5b and 5c, and its cross-sectional area is set to be equal to or larger than the cross-sectional area of the return conductor of the direct-current coaxial cable B. The joint conductor 26a is arranged to pass the outer circumference of the reinforcing main insulating layer 22 of the connecting portion, so that a welding portion 25c between the return conductor 5c of the direct-current coaxial cable C and the joint conductor 26a is located around the outer semiconducting layer 4c of the direct-current coaxial cable C, and a welding portion 25b between the return conductor 5b of the direct-current coaxial cable B and the joint conductor 26a is located around the outer semiconducting layer 4b of the direct-current coaxial cable B. Furthermore, buffer layers 23b and 23c are formed on the outer semiconducting layers 4b and 4c of the direct-current coaxial cables B and C, respectively, and the welding portions 25b and 25c of the return conductors 5b and 5c and the joint conductor 26a are located on the buffer layers 23b and 23c, respectively. It is preferable that the return conductors 5b and 5c and the joint conductor 26a should be weld connected bundle by bundle of a plurality of conductor wires, in the similar manner to the seventh embodiment.

Configurations other than the above description are the same as those in the seventh embodiment, so that the same reference numerals are assigned to the same parts, and detailed explanations of the parts will be omitted. With the above configuration, it is possible to obtain the same effect as the seventh embodiment. Furthermore, by setting the cross-sectional area of the joint conductor 26a larger than the cross-sectional area of the return conductor 5b of the direct-current coaxial cable B, it is possible to further suppress the temperature rise of the connecting portion smaller than that in the seventh embodiment.

(Ninth Embodiment)

Fig. 13 is a longitudinal cross section with a partial cut-open plan view of a substantial part of a power direct-current coaxial cable according to a ninth embodiment. Different points between this direct-current coaxial cable connecting portion and that in the seventh embodiment are that the buffer layer is omitted, and the welding portion 25 of the return conductors 5b and 5c of both of the direct-current coaxial cables B and C is located on the outer semiconducting layer 4c of the direct-current coaxial cable C. If the welding operation for welding the return conductors 5b and 5c is carefully performed, it is possible to take such a configuration. Configurations other than the above description are the same as those in the seventh embodiment, so that the same reference numerals are assigned to the same parts, and detailed explanations of the parts will be omitted.

(Tenth Embodiment)

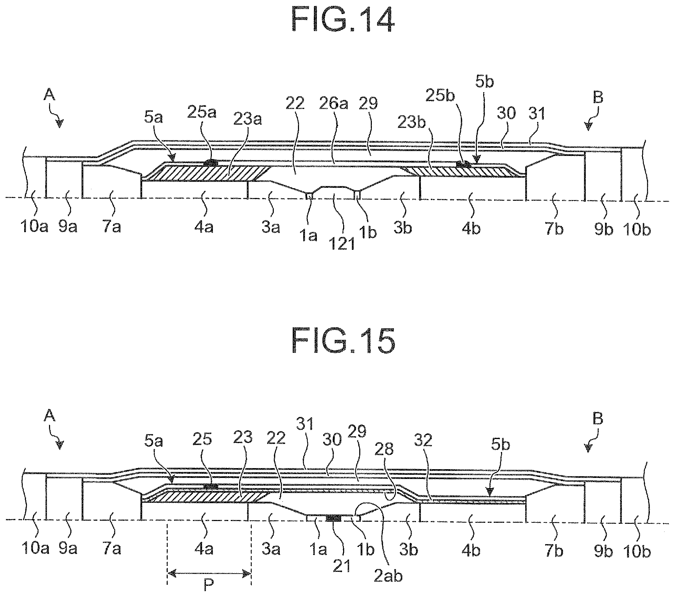

Fig. 14 is a longitudinal cross section with a partial cut-open plan view of a substantial part of a power direct-current coaxial cable according to a tenth embodiment. A different point between this direct-current coaxial cable connecting portion and that in the eighth embodiment is that direct-current coaxial cables A and B having the return conductors of the same cross-sectional area are connected with each other. The joint conductor 26a has the cross-sectional area larger than those of the return conductors 5a and 5b. Configurations other than the above description are the same as those in the eighth embodiment, so that the same reference numerals are assigned to the same parts, and detailed explanations of the parts will be omitted. According to this embodiment, it is possible to suppress the temperature rise of the cable connecting portion lower than a case in which the return conductors 5a and 5b are connected with each other.

(Eleventh Embodiment)

Fig. 15 is a longitudinal cross section with a partial cut-open plan view of a substantial part of a power direct-current coaxial cable according to an eleventh embodiment. In direct-current coaxial cables A and B to be connected with each other, the anticorrosion layers 10a and 10b, the lead sheaths 9a and 9b, and the return insulating layers 7a and 7b (the semiconducting layers on inside and outside are not shown), the outer semiconducting layers 4b and 4c, the main insulating layers 3a and 3b, and inner semiconducting layers (not shown) are sequentially pilled so that main conductors 1a and 1b are exposed at distal ends of the cables. A reference numeral 21 indicates a weld connecting portion of the main conductor 1. A reference numeral 2ab indicates an inner semiconducting layer at a connecting portion that is formed across the weld connecting portion 21 and the inner semiconducting layers (not shown) of the cable on both sides, and a reference numeral 22 indicates a reinforcing main insulating layer formed across the inner semiconducting layer 2ab and the main insulating layers 3a and 3b on both sides, and a reference numeral 28 indicates an outer semiconducting layer formed across the reinforcing main insulating layer 22 and the outer semiconducting layers 4a and 4b of the direct-current coaxial cables A and B on both sides. The outer diameter of the reinforcing main insulating layer 22 becomes larger than the outer diameter of the main insulating layers 3a and 3b of the cables. Thus, the outer diameter of the outer semiconducting layer 28 of the connecting portion also becomes larger than the outer diameter of the outer semiconducting layers 4a and 4b of the cables.

In this embodiment, a welding connection of the return conductors 5a and 5b is performed at an area P where the outer semiconducting layer 4a of the direct-current coaxial cable A is exposed, and the buffer layer 23 is provided in the area P. It is preferable that the buffer layer 23 should be formed by winding a semiconducting cushion tape with the constant outer diameter from the outer semiconducting layer 4a of the direct-current coaxial cable A to the outer semiconducting layer 28 of the connecting portion in such a manner that the outer diameter becomes even. Typically, the difference of diameter between the main insulating layer and the reinforcing main insulating layer of the cable is about 6 mm to 40 mm, and a thickness of the buffer layer formed by winding the semiconducting cushion tape becomes about 3 mm to 20 mm. A winding thickness of the semiconducting cushion tape necessary for preventing the thermal damage caused by the heat generated when welding the return-conductor wire bundles should be equal to or thicker than 3 mm, and the winding thickness of the semiconducting cushion tape is enough to prevent a physical damage on the main insulating layer and the outer semiconducting layer of the cable when connecting the return conductors.

After forming the buffer layer 23 as described above, a metallic layer 32 is formed across the buffer layer 23, the outer semiconducting layer 28 of the connecting portion, and the outer semiconducting layers 4a and 4b of the direct-current coaxial cables A and B. Although it is preferable that the metallic layer 32 should be formed by winding a copper mesh tape, it can also be formed by winding a metal tape such as a lead tape, a copper tape, or an aluminum tape.

After forming the metallic layer 32, a welding connection of the return conductors 5a and 5b of both of the direct-current coaxial cables A and B is performed on the metallic layer 32 in the area P where the buffer layer 23 is formed. A reference numeral 25 indicates a welding portion of the return conductors 5a and 5b. Because the buffer layer 23 is formed on the outer semiconducting layer 4a of the direct-current coaxial cable A, there is no worry about causing a thermal damage on the outer semiconducting layer 4a and the main insulating layer 3a, and the outer semiconducting layer 28 and the reinforcing main insulating layer 22 of the connecting portion by the heat generated when welding the return conductors 5a and 5b.

When weld connecting the return conductors 5a and 5b with each other, the return-conductor wires can be welded one by one; however, as described above, a plurality of return-conductor wires can be bundled, so that the bundles are weld connected with each other. By welding the bundles with each other, the number of weld operations can be reduced, and the welding operation can be performed with efficiency. For example, when connecting direct-current coaxial cables having the cross-sectional area of the main conductor of 400 mm$^2$ with the return-conductor wires of φ2.6 mm x 55 wires stranded with each other, by making a bundle of return-conductor wires by 5 wires and welding the bundles in a butt jointing manner, the number of welding operations can be reduced to 11 times.

A connecting operation after weld connecting the return conductors 5a and 5b is the same as the conventional operation. In other words, the reinforcing return insulating layer 29 is formed across the return insulating layers 7a and 7b of both of the direct-current coaxial cables A and B, and then a lead sheath 30 and the anticorrosion layer 31 can be sequentially formed. On the inner side of the reinforcing return insulating layer 29, a return inner semiconducting layer of the connecting portion is formed across the return inner semiconducting layers of both of the direct-current coaxial cables A and B, and on the outer side of the reinforcing return insulating layer 29, a return outer semiconducting layer of the connecting portion is formed across the return outer semiconducting layers of both cables, although they are not shown in the figure.

In the direct-current coaxial cable connecting portion configured as described above, because the outer diameter of the reinforcing main insulating layer 22 is larger than the outer diameters of the main insulating layers 3a and 3b of the cables, a space between wires of the return conductors 5a and 5b located on the outer side of the reinforcing main insulating layer 22 and the buffer layer 23 is wider than that of the cable portion. However, because the metallic layer 32 if formed right below the return conductors 5a and 5b, sufficient electromagnetic shield characteristics can be secured. In addition, by providing the metallic layer 32, the electricity distribution becomes even for every return-conductor wires in the cable connecting portion, and at the same time, the return-conductor resistance is decreased. Thus, the heat generation at the return conductors can be suppressed, and as a result, the temperature rise can be suppressed.

(Twelfth Embodiment)

Fig. 16 is a longitudinal cross section with a partial cut-open plan view of a substantial part of a power direct-current coaxial cable according to a twelfth embodiment. A different point between this embodiment and the eleventh embodiment is that the metallic layer 32 is provided right above the return conductors 5a and 5b not below them. Other configurations are the same as those in the eleventh embodiment, so that the same reference numerals are assigned to the same parts, and detailed explanations of the parts will be omitted. Even with the above configuration, it is possible to obtain the same effect as the eleventh embodiment.

INDUSTRIAL APPLICABILITY

The present invention is suitable for connecting power direct-current coaxial cables.

**Claims**

1.  A connecting portion including power direct-current coaxial cables each including a main conductor (1) at a center of the cable; a main insulating layer (3) around the main conductor (1), and a return conductor (5) that is formed by coaxially stranding a plurality of return-conductor wires around the main insulating layer (3), **characterized in that** a return-conductor wire bundle (24b,24c) is formed by placing a plurality of aligned return- conductor wires (12b, 12c)next to each other for each of the power direct-current coaxial cables, the return-conductor wire bundles (24b, 24c) are welded in a butt-jointing manner to each other, the number of wires and the diameter of the return-conductor wires of the direct-current coaxial cables to be connected with each other are different, the cross section of the wire is circular and the width of each wire bundle corresponds to the diameter of a wire multiplied for the number of wires, and a difference between widths of the return-conductor wire bundles (24b, 24c) to be connected is smaller than twice a diameter of a return-conductor wire that forms a wider return-conductor wire bundle.

2.  The connecting portion according to claim 1 , wherein each of the power direct-current coaxial cables further includes an inner semiconducting layer between the main conductor (1) and the main insulating layer (3), and an outer semiconducting layer (4) around the main insulating layer (3), so that the return conductor (5) is provided around the outer semiconducting layer (4), a buffer layer (23) is provided at an area where a welding portion (25) is located, and the welding portion (25) is located on the buffer layer (23).

3.  The connecting portion according to claim 2, wherein the buffer layer (23) is formed on the outer semiconducting layer (4).

4. The connecting portion according to claim 2, wherein
a return conductor of a direct-current coaxial cable having a return conductor of a larger cross-sectional area is arranged to pass an outer circumference of a reinforcing main insulating layer (22), and
a connection portion (25)connecting the return conductors is located at an outer circumference of an outer semiconductor layer of a direct-current coaxial cable having a return conductor of a small cross-sectional area.

**Patentansprüche**

1. Verbindungsabschnitt mit Gleichstrom-Koaxialkabeln, die jeweils einen Hauptleiter (1) in einer Mitte des Kabels; eine Hauptisolationsschicht (3) um den Hauptleiter (1) und einen Rückleiter (5), der durch koaxiales Verseilen einer Vielzahl von Rückleitungsdrähten um die Hauptisolationsschicht (3) ausgebildet ist, aufweisen, **dadurch gekennzeichnet, dass**
ein Rückleiterdrahtbündel (24b, 24c) gebildet wird, indem eine Vielzahl von ausgerichteten Rückleiterdrähten (12b, 12c) für jedes der Gleichstrom-Koaxialkabel nebeneinander angeordnet wird,
wobei die Rückleiterdrahtbündel (24b, 24c) stumpf miteinander verschweißt sind,
wobei die Anzahl der Drähte und der Durchmesser der Rückleiterdrähte der miteinander zu verbindenden Gleichstrom-Koaxialkabel unterschiedlich sind,
wobei der Querschnitt des Drahtes kreisförmig ist und die Breite jedes Drahtbündels dem Durchmesser eines Drahtes multipliziert mit der Anzahl der Drähte entspricht und
wobei ein Unterschied zwischen den Breiten der zu verbindenden Rückleiterdrahtbündel (24b, 24c) kleiner ist als der doppelte Durchmesser eines Rückleiterdrahtes, der ein breiteres Rückleiterdrahtbündel bildet.

2. Verbindungsabschnitt nach Anspruch 1, wobei jedes der Gleichstrom-Koaxialkabel ferner eine innere halbleitende Schicht zwischen dem Hauptleiter (1) und der Hauptisolationsschicht (3) und eine äußere halbleitende Schicht (4) um die Hauptisolationsschicht (3) aufweist, so dass der Rückleiter (5) um die äußere halbleitende Schicht (4) vorgesehen ist,
wobei eine Pufferschicht (23) an einem Bereich vorgesehen ist, an dem sich ein Schweißabschnitt (25) befindet und wobei
der Schweißabschnitt (25) sich auf der Pufferschicht (23) befindet.

3. Verbindungsabschnitt nach Anspruch 2, wobei die Pufferschicht (23) auf der äußeren halbleitenden Schicht (4) ausgebildet ist.

4. Verbindungsabschnitt nach Anspruch 2, wobei
ein Rückleiter eines Gleichstrom-Koaxialkabels, das einen Rückleiter mit einer größeren Querschnittsfläche aufweist, so angeordnet ist, um auf einem äußeren Umfang einer verstärkenden Hauptisolierschicht (22) zu verlaufen und
ein Verbindungsabschnitt (25), der die Rückleiter verbindet, sich an einem äußeren Umfang einer äußeren halbleitenden Schicht eines Gleichstrom-Koaxialkabels mit einem Rückleiter mit einer kleinen Querschnittsfläche befindet.

**Revendications**

1. Section de connexion incluant des câbles coaxiaux d'alimentation en courant continu dont chacun inclut un conducteur principal (1) au niveau d'un centre du câble ; une couche isolante principale (3) autour du conducteur principal (1) et un conducteur de retour (5) qui est formé en toronnant coaxialement une pluralité de fils de conducteur de retour autour de la couche isolante principale (3) ; **caractérisée en ce que** :

un faisceau de fils de conducteur de retour (24b, 24c) est formé en plaçant une pluralité de fils de conducteur de retour alignés (12b, 12c) en contiguïté les uns par rapport aux autres pour chacun des câbles coaxiaux d'alimentation en courant continu ;
les faisceaux de fils de conducteur de retour (24b, 24c) sont soudés les uns aux autres d'une façon par aboutement ;
le nombre de fils et le diamètre des fils de conducteur de retour des câbles coaxiaux d'alimentation en courant continu qui sont destinés à être connectés les uns aux autres sont différents ;
l'aire en coupe transversale du fil est circulaire et la largeur de chaque faisceau de fils correspond au diamètre d'un fil multiplié par le nombre de fils ; et

une différence entre des largeurs des faisceaux de fils de conducteur de retour (24b, 24c) qui sont destinés à être connectés est inférieure à deux fois un diamètre d'un fil de conducteur de retour qui forme un faisceau de fils de conducteur de retour plus large.

2. Section de connexion selon la revendication 1, dans laquelle :

chacun des câbles coaxiaux d'alimentation en courant continu inclut en outre une couche de semiconduction interne entre le conducteur principal (1) et la couche isolante principale (3), et une couche de semiconduction externe (4) autour de la couche isolante principale (3), de telle sorte que le conducteur de retour (5) soit placé autour de la couche de semiconduction externe (4) ;
une couche tampon (23) est prévue au niveau d'une zone au niveau de laquelle une section de soudage (25) est localisée ; et
la section de soudage (25) est localisée sur la couche tampon (23).

3. Section de connexion selon la revendication 2, dans laquelle la couche tampon (23) est formée sur la couche de semiconduction externe (4).

4. Section de connexion selon la revendication 2, dans laquelle :

un conducteur de retour d'un câble coaxial d'alimentation en courant continu qui comporte un conducteur de retour d'une aire en coupe transversale plus grande est agencé de manière à ce qu'il passe au travers d'une circonférence externe d'une couche isolante principale de renforcement (22) ; et
une section de connexion (25) qui connecte les conducteurs de retour est localisée au niveau d'une circonférence externe d'une couche de semiconduction externe d'un câble coaxial d'alimentation en courant continu qui comporte un conducteur de retour d'une aire en coupe transversale petite.

# FIG.1

# FIG.2

# FIG.3

# FIG.4-1

# FIG.4-2

# FIG.5

# FIG.6

# FIG.7

# FIG.8-1

# FIG.8-2

# FIG.8-3

# FIG.9

# FIG.10

## FIG.11-1

DIRECT-CURRENT COAXIAL CABLE CONNECTING PORTION

RETURN CONDUCTOR WELDING: CABLE C-SIDE
AMBIENT TEMPERATURE: 20°C
MAIN CONDUCTOR CURRENT: 700 A
RETURN CONDUCTOR CURRENT: 700 A

MAIN CONDUCTOR

RETURN CONDUCTOR

RETURN CONDUCTOR WELDING AREA

CENTER OF CONNECTING PORTION

<DIRECT-CURRENT COAXIAL CABLE C-SIDE>
MAIN CONDUCTOR 400 mm$^2$
RETURN CONDUCTOR $\phi$2.6 mm x 55 WIRES (215 mm$^2$)

<DIRECT-CURRENT COAXIAL CABLE B-SIDE>
MAIN CONDUCTOR 500 mm$^2$
RETURN CONDUCTOR $\phi$5.0 mm x 30 WIRES (463 mm$^2$)

TEMPERATURE [°C]

CABLE POSITION IN LONGITUDINAL DIRECTION [mm]

## FIG.11-2

DIRECT-CURRENT COAXIAL CABLE CONNECTING PORTION

RETURN CONDUCTOR WELDING: CABLE B-SIDE
AMBIENT TEMPERATURE: 20°C
MAIN CONDUCTOR CURRENT: 700 A
RETURN CONDUCTOR CURRENT: 700 A

MAIN CONDUCTOR

RETURN CONDUCTOR

RETURN CONDUCTOR WELDING AREA

CENTER OF CONNECTING PORTION

<DIRECT-CURRENT COAXIAL CABLE C-SIDE>
MAIN CONDUCTOR 400 mm$^2$
RETURN CONDUCTOR $\phi$2.6 mm x 55 WIRES (215 mm$^2$)

<DIRECT-CURRENT COAXIAL CABLE B-SIDE>
MAIN CONDUCTOR 500 mm$^2$
RETURN CONDUCTOR $\phi$5.0 mm x 30 WIRES (463 mm$^2$)

TEMPERATURE [°C]

CABLE POSITION IN LONGITUDINAL DIRECTION [mm]

## FIG.12

## FIG.13

28

# FIG.14

# FIG.15

# FIG.16

# FIG.17

## FIG.18-1

## FIG.18-2

## FIG.18-3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11111071 B
- JP 2001112139 A
- JP 49021684 A
- DE 1034240
- JP H11120837 B